# EUROPÄISCHE PATENTSCHRIFT

(11) **EP 3 865 199 B1**
(45) Veröffentlichungstag und Bekanntmachung des Hinweises auf die Patenterteilung: **13.09.2023**
(21) Anmeldenummer: 20156997.7
(22) Anmeldetag: 12.02.2020
(51) Int. Cl.: B01D 46/00, B01D 46/44, B01D 46/52

(54) **FILTERMODUL MIT SENSOR ZUR BESTIMMUNG DES BELADUNGSZUSTANDES UND VERFAHREN ZUM BESTIMMEN DES BELADUNGSZUSTANDES**
FILTER MODULE WITH SENSOR FOR DETERMINING THE LOADING CONDITION AND METHOD FOR DETERMINING THE LOADING CONDITION
MODULE DE FILTRE POURVU DE CAPTEUR POUR DÉTERMINER L'ÉTAT DE CHARGE ET PROCÉDÉ DE DÉTERMINATION DE L'ÉTAT DE CHARGE

(43) Veröffentlichungstag der Anmeldung: 18.08.2021
(73) Patentinhaber: Carl Freudenberg KG, 69469 Weinheim (DE)
(72) Erfinder: Tapper, Renate, 64625 Bensheim (DE); Kluck, Stefan, Dr., 68799 Reilingen (DE)

(56) Entgegenhaltungen:
- EP-A1- 2 638 946
- WO-A1-2020/088899
- DE-A1-102008 057 458
- US-B2- 9 938 980

## Beschreibung

Die Erfindung betrifft ein Filtermodul gemäß dem Oberbegriff von Anspruch 1. Weiter betrifft die Erfindung ein Verfahren zum Bestimmen des Zustandes eines Filterelements gemäß Anspruch 7.

### Stand der Technik

In Anlagen, welche einen Bedarf an sauberer Luft haben, werden standardmäßig mehrere Filterelemente parallel zueinander angeordnet, um eine größere, gereinigte Luftmenge bereitstellen zu können. Ein solches Filtermodul mit mehreren Filterpatronen ist beispielsweise in der US 7,294,163 B1 dargestellt.

Um den Zustand des Filtermoduls zu überwachen ist es üblich die statische Druckdifferenz, d.h. den Druckverlust, an dem gesamten Filtermodul zu messen. Da die verschiedenen Filterelemente des Filtermoduls jedoch nicht den gleichen Beladungszustand aufweisen müssen oder auch nur einzelne Filterelement eine Beschädigung aufweisen können, ist diese Gesamtbetrachtung wenig hilfreich, um Aussagen über den Zustand der einzelnen Filterelemente machen zu können. Weisen die Filterelemente unterschiedliche Zustände auf, so wirkt sich dies auf die Verteilung des Durchflusses von Luft durch die jeweiligen Filterelemente aus und es ergibt sich ein asymmetrischer Luftstrom durch das Filtermodul. Wird beispielsweise eines der Filterelemente nun beschädigt, so wird sich die Messgröße "Druckverlust am Filtermodul" nicht ändern bzw. nicht nachweisbar ändern. Gleiches gilt, wenn ein Filterelement sehr stark beladen ist und zur Reinigung der Luft nichts mehr beitragen kann. Je größer die Anzahl der parallel verbauten Filterelemente ist, desto geringer ist der Einfluss des Zustandes eines einzelnen Filterelements (und z.B. dessen Beladungszustand oder Defekt) auf den gemessenen Druckverlust. Ist beispielsweise ein Filterelement defekt und weist einen Durchbruch auf und ist ein anderes Filterelement stark beladen und kaum noch luftdurchlässig, so kann der gemessene Druckverlust am gesamten Filtermodul einen unverdächtigen Wert liefern, welcher nicht auf den wahren Zustand der einzelnen Filterelemente rückschließen lässt.

Nachteilig an der globalen Messung des Druckverlusts ist, dass einzelne Filterelemente nicht zum idealen Zeitpunkt abgereinigt oder getauscht werden können, da ihr individueller Zustand nicht bekannt ist. Für den Betrieb des Filtermoduls muss daher mehr Energie aufgewendet werden. Werden die Filterelemente prophylaktisch oder zu früh gereinigt bzw. getauscht, so wirkt sich dies nachteilig auf die Gesamtleistung bzw. die Kosten aus.

Weiter problematisch ist, dass zur Messung der Druckdifferenz eine rohgasseitige und eine reingasseitige Messstelle erforderlich sind. Die rohgasseitige Messstelle ist anfällig für Verschmutzungen, was die Gefahr eines Ausfalles des Messsystems birgt.

Die DE 101 40 510 B4 zeigt einen Filtermodul mit nur einem Filterelement. An dem Filterelement ist ein Sensor angebracht, um die aktuelle Luftgeschwindigkeit durch den Filter bestimmen zu können. Da in dem Filtermodul nur ein Filterelement vorgesehen ist, besteht die vorstehend beschriebene Problematik hier nicht.

In der WO 2020/088899 A1 ist eine Filteranordnung mit Filterkartuschen offenbart. Sie verfügt über Sensoren, welche an der unteren Endscheibe einer jeweiligen Kartusche angeordnet sind. Der Sensor, welcher als Membran ausgeführt sein kann grenzt somit sowohl an die Rohgasseite (unterhalb der Filterpatrone) als auch an den Filterinnenraum an.

Die DE 10 2008 057 458 A1 betrifft ein Verfahren und eine Vorrichtung zur Durchführung von Integritätstests von Filterelementen. Die Integrität kann dabei durch einen Vergleich von mit einem Sensor zu Schallmessung erfassten Werten eines für gut befundenen Filterelements verglichen werden.

Die EP 2 638 946 A1 betrifft keinen Filter, sondern eine Partikelmesseinrichtung und es werden zwei Filtermedien mit unterschiedlichen Filtrationseigenschaften in die Partikelmesseinrichtung eingesetzt.

In der US 9 938 980 B2 wird mittels Sensoren eine zweidimensionale Matrix zur Zustandsbestimmung von Filterpaketen erzeugt, wobei die die Sensoren die Strömungsgeschwindigkeit durch die Filterpakete messen.

Neben der Messung der Strömungsgeschwindigkeit eines Fluids sind grundsätzlich auch die Messung des Volumenstroms oder des Massestroms von Fluiden bekannt.

### Aufgabenstellung

Aufgabe der vorliegenden Erfindung ist es, ein Filtermodul mit einer Mehrzahl von Filterelementen zu schaffen, bei welchem der Zustand der einzelnen Filterelemente bestimmt werden kann.

Weitere Aufgabe ist es, ein Verfahren zu beschreiben, mit welchem eine Bestimmung des Zustands von einzelnen Filterelementen eines Filtermoduls ermöglicht wird.

### Technische Lösung

Gelöst wird diese Aufgabe durch ein Filtermodul mit den Merkmalen von Anspruch 1.

Erfindungsgemäß wurde als vorteilhaft erkannt, jedem Filterelement einen Sensor zur Bestimmung des Beladungszustandes zuzuordnen:
Das erfindungsgemäße Filtermodul dient zum Filtern eines Fluidstroms, insbesondere eines Luftstroms, und weist eine Mehrzahl von parallel zueinander in einem Fluidkanal, insbesondere einem Luftkanal, angeordneten Filterelementen auf, wobei die Filterelemente von dem Fluidstrom von einer Rohgasseite zu einer Reingasseite hin durchströmt werden und das Fluid, insbesondere Luft, dabei gefiltert, also gereinigt wird. Die Anordnung der Filterelemente ist die einer Parallelschaltung. Die Filterelemente des Filtermoduls sind als Filterpatronen mit plissiertem Filtermedium ausgeführt, d.h. als Faltenbalg mit Zick-Zack-Faltung.

In vorteilhafter Weise ist an jedem Filterelement ein Sensor angebracht zur mittelbaren oder unmittelbaren Bestimmung des Zustandes des jeweiligen Filterelements, insbesondere von dessen Beladungszustand oder Alterungszustand.

Es hat sich als vorteilhaft erwiesen, die Sensoren als Durchflusssensoren auszubilden und die Größe des Durchflusses eines jeweiligen Teilfluidstromes durch ein jeweiliges Filterelement zu messen. Derartige Sensoren werden auch als Durchflussmesser oder Flowmeter bezeichnet. Durchfluss meint dabei u.a. die Geschwindigkeit, die Menge oder die Masse des durch ein Filterelement bewegten Fluids.

Ein derartiges Filtermodul hat den Vorteil, dass der Zustand der einzelnen Filterelemente bestimmt werden und nicht nur eine globale Aussage über das ganze Filtermodul gemacht werden kann. Somit wird ein Eingreifen bei nicht voll funktionsfähigen einzelnen Filterelementen ermöglicht.

Beim Filtermodul sind die Sensoren auf der Reingasseite eines jeweiligen Filterelements positioniert und damit geschützt vor Verunreinigung.

Gemäß der Erfindung können die Durchflusssensoren den Differenzdruck in einem jeweiligen Filterelement unter Berücksichtigung des dynamischen Druckes messen, z.B. unter Verwendung einer Prandtlsonde, also einem Sensor mit Aufbau in Anlehnung an das sog. Prandtlrohr, einer Standdrucksonde oder einer Differenzdruck-Normblende.

Beispielsweise kann bei dieser Variante der Staudruck an der Engstelle am Flansch gegen den lokalen statischen Druck gemessen werden. Die Größe ist ein unmittelbares Maß für den Durchfluss. Dies entspricht einer individuellen Abwandlung einer Differenzdruck-Normblende. Vorteilhaft ist dabei, nicht auf eine zusätzlich eingebrachte Blendengeometrie zu kalibrieren, sondern vielmehr auf eine ohnehin konstruktiv vorhandene Geometrie, nämlich der Engstelle des Flansches.

Die Erfindung betrifft auch ein Verfahren zum Bestimmen des Zustandes, insbesondere des Beladungszustandes oder Alterungszustandes, eines Filterelements in einem Filtermodul mit einer Mehrzahl von parallel zueinander in einem Fluidkanal, insbesondere Luftkanal, angeordneten Filterelementen, insbesondere wie vorstehend beschrieben. Das Verfahren weist folgende Schritte auf:
- Messung des Durchflusses von Fluid, insbesondere Luft, durch ein jeweiliges Filterelement mittels eines sog. Durchflusssensors. Grundsätzlich können unterschiedliche Messgrößen geeignet sein, sofern sie ein Maß für den Durchfluss darstellen.
- Abgleich des Messergebnisses mit in einem Speicher für das jeweilige Filterelement hinterlegten Durchflusswerten. Der Abgleich kann in einer Recheneinheit erfolgen, welche außerhalb des Filtermoduls positioniert ist. Dazu werden die Messwerte datenübertragungstechnisch an die Recheneinheit weitergegeben, beispielsweise mittels Near Field Communication (NFC) und/oder Internet. Die Recheneinheit kann über einen Datenspeicher verfügen oder mit einem Datenspeicher verbindbar sein, in welchem Erfahrungswerte, Soll-Durchflusswerte, Beladungszustände und/oder Grenzwerte abgespeichert sind. Bei den hinterlegten Durchflusswerten kann es sich um Erfahrungswerte handeln, welche beispielsweise am neuen, unverschmutzten und voll funktionsfähigen Filterelement ermittelt werden.
- Ableitung des Zustandes, insbesondere des Beladungszustandes und/ oder des Alterungszustandes, eines jeweiligen Filterelements basierend auf dem zuvor ausgeführten Abgleich durch die Recheneinheit.

Bei der Messung im ersten Verfahrensschritt wird der Differenzdruck des Fluids, z.B. der Luft in dem Filterelement erfasst werden.

In Weiterbildung des Verfahrens erfolgt in einem zusätzlichen Schritt eine Überprüfung, ob ein Messergebnis einen vordefinierten Grenzwert unterschreitet oder überschreitet und/ oder ob eine zeitliche Änderung der Messergebnisse von einem hinterlegten Erfahrungswert abweicht und zutreffenden Falls erfolgt nachfolgend die Ausgabe eines Signals.

Die Grenzwerte und hinterlegten Erfahrungswerte sind jeweils spezifisch für einen Typ von Filterelementen festzulegen. Dabei können auch abgestufte Grenzwerte festgelegt sein, um unterschiedliche Warnstufen zu realisieren, z.B. zur Vorankündigung eines bald zu erwartenden schlechten Beladungszustandes, zur Mitteilung eines kritischen Beladungszustandes und zur Warnung bei Vorliegen eines Beladungszustandes mit zu erwartenden Folgeschäden.

Es kann eine Überprüfung erfolgen, ob der Durchfluss einen bestimmten Grenzwert überschreitet. Dies kann ein Hinweis darauf sein, dass das Filterelement defekt ist und beispielsweise ein Loch im Filtermedium aufweist. Es kann eine Überprüfung erfolgen, ob der Beladungszustand einen bestimmten Grenzwert überschreitet bzw. ob der Durchfluss einen bestimmten Grenzwert unterschreitet. Dies kann ein Hinweis darauf sein, dass das Filterelement stark mit Partikeln zugesetzt ist und seiner Filtrationsaufgabe nicht mehr in ausreichendem Maße nachkommen kann.

Es kann eine Überprüfung erfolgen, ob die zeitliche Änderung des Beladungszustands von einem bestimmten tolerierbaren Erfahrungswert stark abweicht. Dies kann ein Hinweis darauf sein, dass das Filterelement bereits eine starke Alterung aufweist, möglicher Weise bereits das Ende seiner Lebensdauer erreicht hat und folglich seine Filtrationsleistung nicht mehr genügt.

In Abhängigkeit von dem Ergebnis der Überprüfung kann es sich bei dem Signal handeln um ein
- Warnsignal an einen Maschinen- bzw. Anlagenbediener, beispielsweise über einen Bildschirm der Maschinen- bzw. Anlagensteuerung oder über ein Mobilgerät (Smartphone oder Tablet),
- Abschaltsignal an einen Maschinen- bzw. Anlagenbediener,
- Abschaltsignal einer Maschine- bzw. Anlage, welches einen direkten Eingriff in die Maschinen- bzw. Anlagensteuerung bewirkt,
- Auslösesignal für einen Abreinigungsprozess des Filterelements,
- Auslösesignal für einen Predictive-Maintenance-Auftrag zur Instandhaltung oder Instandsetzung des Filterelements, oder
- Auslösesignal für einen Bestellprozess eines Ersatzfilterelements, z.B. durch Bestellung in einem Online-Shop.

Das Signal umfasst bevorzugt eine Information, welche eine Zuordnung zu einem bestimmten Filterelement der Mehrzahl von Filterelementen in dem Filtermodul zulässt. Das Signal könnte beispielsweise die Information umfassen, dass das Filterelement hinten links defekt ist, ein anderes Signal könnte die Information umfassen, dass das Filterelement vorne rechts am Ende seiner Lebensdauer ist, und in beiden Fällten könnte ein Warnsignal an den Maschinen- bzw. Anlagenbediener ausgegeben werden, sei es über einen Bildschirm der Maschinen- bzw. Anlagensteuerung oder über ein Mobilgerät (Smartphone oder Tablet).

Die Erfindung betrifft auch eine Anlage mit einem wie obenstehend beschriebenen Filtermodul, wobei die Anlage als Energieerzeugungsanlage, als Entstaubungsanlage zur Abgasreinigung, als Turbomaschine oder als Produktionsanlage ausgebildet ist. Eine Turbomaschine wird auch als Strömungsmaschine bezeichnet und kann beispielsweise als Gasturbine oder als Verdichter ausgeführt sein. Die Produktionsanlage kann in der Oberflächentechnik zum Einsatz gelangen, z.B. als Lackieranlage, in der Produktion von pharmazeutischen Produkten oder zur Herstellung von Nahrungsmitteln oder Getränken dienen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: den Aufbau eines erfindungsgemäßen Filtermoduls
- Fig. 2: ein Filterelement in Form einer Filterpatrone
- Fig. 3: eine Detaildarstellung zu Fig. 2
- Fig. 4: ein rechteckiges Filterelement
- Fig. 5a und b: Diagramme zur Darstellung des Beladungszustandes und des Durchflusses

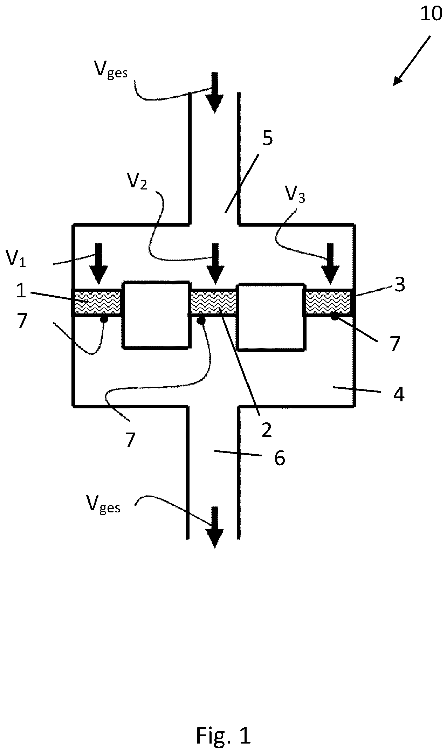

Fig. 1 zeigt den Aufbau eines erfindungsgemäßen Filtermoduls 10. In einem Luftkanal 4 des Filtermoduls 10 befindet sich eine Mehrzahl von Filterelementen, hier ein erstes Filterelement 1, ein zweites Filterelement 2 und ein drittes Filterelement 3, welche in einer Parallelschaltung angeordnet sind. Denkbar ist jedoch auch eine größere Anzahl von Filterelementen, welche matrixartig angeordnet sind. Luft strömt von einer Rohgasseite 5 zu einer Reingasseite 6 und wird dabei gefiltert. An Einlass und Auslass des Filtermoduls 10 strömt ein Gesamtvolumenstrom V_{ges}. Dieser Gesamtvolumenstrom V_{ges} teilt sich so auf, dass durch das erste Filterelement 1 ein erster Teilvolumenstrom V₁, durch das zweite Filterelement 2 ein zweiter Teilvolumenstrom V₂ und durch das dritte Filterelement 3 ein dritter Teilvolumenstrom V₃ fließt. Um eine Aussage über den Zustand eines jeweiligen Filterelements 1, 2, 3 treffen zu können, ist an jedem der Filterelemente 1, 2, 3 auf dessen Reingasseite ein Sensor 7 angeordnet, welcher der Messung des Durchflusses durch das jeweilige Filterelement 1, 2, 3 dient.

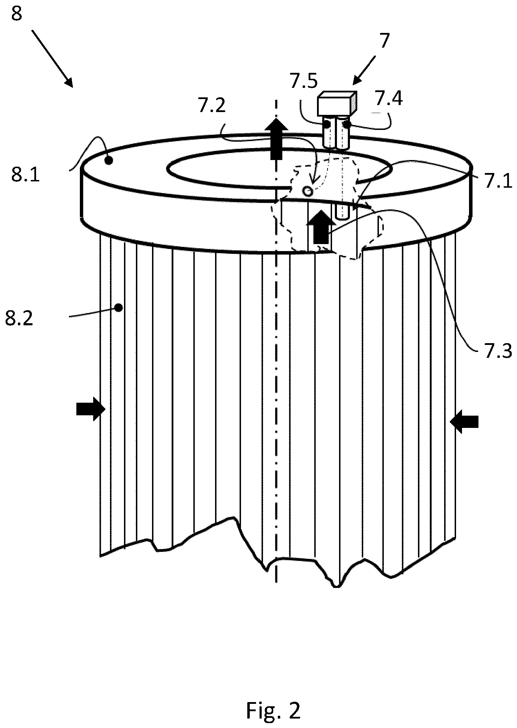

In Fig. 2 ist ein Filterelement 1, 2, 3 in Form einer Filterpatrone 8 dargestellt. Derartige Filterelemente 1, 2, 3 können in einem Filtermodul 10 eingesetzt werden. Die Filterpatrone 8 besitzt ein plissiertes Filtermedium 8.2, welches in zylindrische Form gerollt wurde. Gehalten wird das Filtermedium 8.2 von einem nicht dargestellten runden Boden und einem ebenfalls runden Flansch 8.1 mit mittiger Ausnehmung. Zu filternde Luft strömt - wie durch die Pfeile gezeigt - an der Mantelfläche der Filterpatrone 8 ein, durch das Filtermedium 8.2 hindurch und verlässt die Filterpatrone durch die Ausnehmung im Flansch 8.1. Im Bereich des Flansches 8.1 ist reingasseitig ein Sensor 7 angebracht zur Messung des Durchflusses durch die Filterpatrone 8.

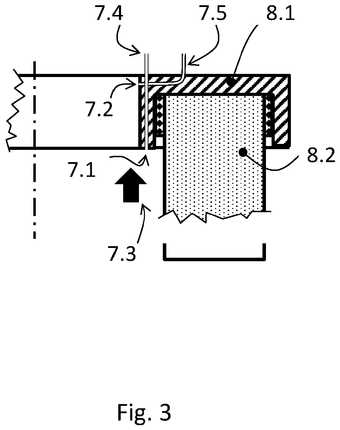

Fig. 3 ist eine Detaildarstellung zu Fig. 2, welche den Aufbau des Sensors 7 näher darstellt, genauer: seiner Probenamestellen. Der Aufbau des Sensors 7 basiert auf dem Messprinzip des Prandtlrohres: als Messstelle für den reingasseitigen Gesamtdruck 7.1 und als Messstelle für den reingasseitigen statischen Druck 7.2. wurden Druckentnahmepositionen im Bereich des Flansches 8.1 festgelegt, welche im Bereich der Hauptströmungsrichtung der Luft liegen (durch einen Pfeil 7.3 angegeben) und damit repräsentative Messergebnisse ermöglichen. In Fortsetzung der Messstelle für den reingasseitigen Gesamtdruck 7.1 und der Messstelle für den reingasseitigen statischen Druck 7.2 sind Kanäle im Flansch 8.1 eingebracht, welche zu Messeingängen eines Druckdifferenzsensors 7.4, 7.5 führen. In dem Druckdifferenzsensor 7.4, 7.5 wird der Differenzdruck gemessen und in ein elektrisches Messsignal gewandelt, welches ein Maß für den Durchfluss durch die Filterpatrone 8 darstellt. Das Messsignal kann über nicht dargestellte Übertragungstechnik datenübertragungstechnisch zur weiteren Bearbeitung und Auswertung an eine Recheneinheit weitergeleitet werden.

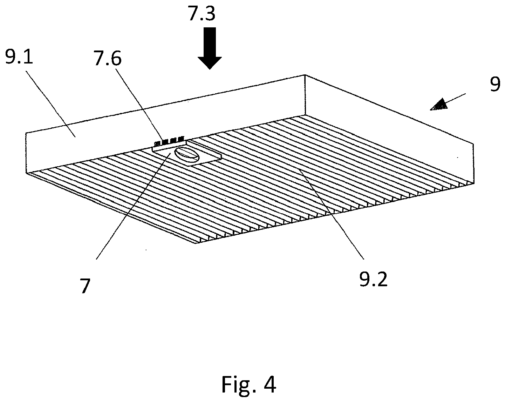

Fig. 4 zeigt ein rechteckiges Filterelement 1, 2, 3 in Form eines Faltenfilters 9. Ein plissiertes Filtermedium 9.2 ist von einem Rahmen 9.1 aufgenommen.

Reingasseitig ist an dem Faltenfilter 9 ein Sensor 7 angeordnet zur Messung des Durchflusses durch den Faltenfilter 9. Der Sensor 7 ist in der Hauptströmungsrichtung 7.3 positioniert. Zur Übertragung der Messergebnisse des Sensors 7 weist dieser elektrische Kontakte 7.6 auf, welche eine datenübertragungstechnische Übertragung an eine Recheneinheit (nicht dargestellt) ermöglichen. Auch solche Faltenfilter 9 können in einem Filtermodul eingesetzt werden.

Die dargestellten und beschriebenen Filter- und Sensortypen sind nur beispielhaft. Auch andere Filter- und Sensortypen sind denkbar.

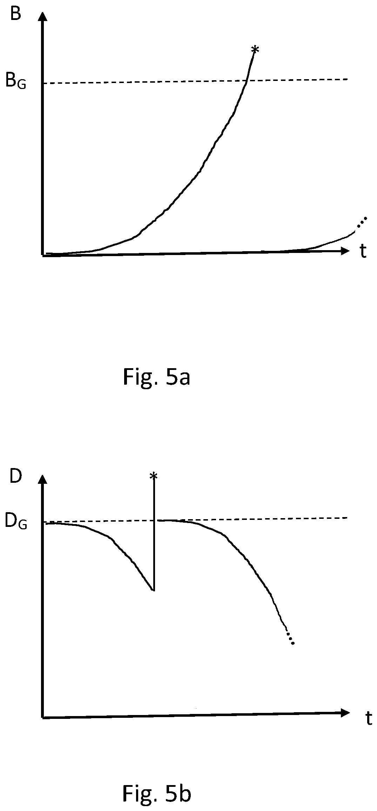

In Fig. 5a ist ein Diagramm zur Darstellung des Beladungszustandes eines Filterelements 1 angedeutet. Im Lauf der Zeit t nimmt die Beladung B eines Filterelements 1 zu. Wenn ein hinterlegter Grenzwert B_{G} überschritten wird, dann wird ein Signal ausgegeben, beispielsweise ein Warnsignal an den Maschinenbediener "Bitte Filterelement 1 tauschen". Der Zeitpunkt des Austausches des Filterelements 1 ist durch einen Stern * gekennzeichnet. Das neue Filterelement 1 weist eine Beladung B von Null auf und die Beladung B nimmt im Lauf der nachfolgenden Zeit wieder zu.

In Fig. 5b ist ein Diagramm zur Darstellung des Durchflusses D durch ein Filterelement 1 angedeutet. Im Lauf der Zeit t nimmt der Durchfluss D eines Filterelements 1 ab. Plötzlich steigt der Durchfluss D jedoch stark an, beispielsweise resultierend aus einer Beschädigung des Filtermediums. Wenn ein hinterlegter Grenzwert D_{G} überschritten wird, dann wird ein Signal ausgegeben, beispielsweise ein Warnsignal an den Maschinenbediener "Bitte Filterelement 1 kontrollieren". Der Zeitpunkt der Kontrolle und des Austausches des Filterelements 1 ist durch einen Stern * gekennzeichnet. Das neue Filterelement 1 weist wieder einen normalen Durchfluss D auf und der Durchfluss D nimmt im Lauf der nachfolgenden Zeit auf Grund von Beladung des 1 Filterelements wieder ab.

### Bezugszeichenliste

- 1: erstes Filterelement
- 2: zweites Filterelement
- 3: drittes Filterelement
- 4: Fluidkanal, z.B. Luftkanal
- 5: Rohgasseite
- 6: Reingasseite
- 7: Sensor
7.1 Messstelle Gesamtdruck reingasseitig
7.2 Messstelle statischer Druck reingasseitig
7.3 Hauptströmungsrichtung
7.4 Messeingang Druckdifferenzsensor
7.5 Messeingang Druckdifferenzsensor
7.6 elektrische Kontakte (Anschluss)
- 8: Filterpatrone 8.1 Flansch 8.2 Filtermedium
- 9: rechteckiger Faltenfilter
9.1 Rahmen
9.2 Filtermedium
- 10: Filtermodul

- V₁: Teilvolumenstrom durch das erste Filterelement
- V₂: Teilvolumenstrom durch das zweite Filterelement
- V₃: Teilvolumenstrom durch das dritte Filterelement
- V_{ges}: Gesamtvolumenstrom durch das Filtermodul

- D: Durchfluss
- D_{G}: Grenzwert Durchfluss
- B: Beladungszustand
- B_{G}: Grenzwert Beladungszustand

## Patentansprüche

1. Filtermodul (10) zum Filtern eines Fluidstroms mit einer Mehrzahl von parallel zueinander in einem Fluidkanal (4) angeordneten Filterelementen (1, 2, 3),
wobei an jedem Filterelement (1, 2, 3) ein Sensor (7) angebracht ist zur Bestimmung des Zustandes, insbesondere Beladungszustandes, des jeweiligen Filterelements (1, 2, 3), wobei die Sensoren (7) als Durchflusssensoren ausgebildet sind und die Sensoren (7) den Differenzdruck messen,
wobei die Filterelemente (1, 2, 3) als Filterpatronen (8) mit plissiertem Filtermedium (8.2) ausgeführt sind **dadurch gekennzeichnet, dass** die Sensoren (7) auf der Reingasseite (6) eines jeweiligen Filterelements (1, 2, 3) positioniert sind, und
die Filterpatrone (8) jeweils einen runden Flansch (8.1) mit mittiger Ausnehmung besitzt und der Sensor (7) jeweils im Bereich des Flansches (8.1) angebracht ist.

2. Verfahren zum Bestimmen des Zustandes, insbesondere Beladungszustandes, eines Filterelements (1, 2, 3) in einem Filtermodul (10) mit einer Mehrzahl von parallel zueinander in einem Fluidkanal (4) angeordneten Filterelementen (1, 2, 3) nach Anspruch 1 mit folgenden Schritten:
a) Messung des Durchflusses von Fluid durch ein jeweiliges Filterelement (1, 2, 3), wobei der Differenzdruck des Fluids in dem Filterelement (1, 2, 3) erfasst wird
b) Abgleich des Messergebnisses aus a) mit in einem Speicher für das jeweilige Filterelement (1, 2, 3) hinterlegten Durchflusswerten
c) Ableitung des Zustandes, insbesondere Beladungszustandes und/ oder Alterungszustandes, eines jeweiligen Filterelements basierend auf dem nach b) ausgeführten Abgleich.

3. Verfahren zum Bestimmen des Zustandes nach Anspruch 2 mit den zusätzlichen Schritten
b') Überprüfung, ob ein Messergebnis einen vordefinierten Grenzwert unterschreitet oder überschreitet und/ oder ob eine zeitliche Änderung der Messergebnisse von einem hinterlegten Erfahrungswert abweicht und nachfolgend
d) Ausgabe eines Signals.

4. Verfahren zum Bestimmen des Zustandes nach Anspruch 3, **dadurch gekennzeichnet,**
**dass** es sich bei dem Signal handelt um ein
- Warnsignal an einen Maschinen- bzw. Anlagenbediener,
- Abschaltsignal an einen Maschinen- bzw. Anlagenbediener,
- Abschaltsignal einer Maschine- bzw. Anlagen,
- Auslösesignal für einen Abreinigungsprozess des Filterelements (1, 2, 3),
- Auslösesignal für einen Predictive-Maintenance-Auftrag, oder
- Auslösesignal für einen Bestellprozess eines Ersatz-Filterelements (1, 2, 3).

5. Anlage mit einem Filtermodul (10) nach Anspruch 1, wobei die Anlage als Energieerzeugungsanlage, als Abgasstromreinigungsanlage, als Turbomaschine oder als Produktionsanlage ausgebildet ist.

## Claims

1. A filter module (10) for filtering a fluid flow having a plurality of filter elements (1, 2, 3) arranged in parallel to one another in a fluid channel (4), wherein a sensor (7) is attached to each filter element (1, 2, 3) for determining the condition, in particular the loading condition, of the respective filter element (1, 2, 3), wherein the sensors (7) are designed as flow rate sensors and the sensors (7) measure the differential pressure, wherein the filter elements (1, 2, 3) are embodied as filter cartridges (8) having pleated filter medium (8.2), **characterized in that** the sensors (7) are positioned on the clean gas side (6) of a respective filter element (1, 2, 3), and
the filter cartridges (8) each have a round flange (8.1) having a central opening and the sensor (7) is attached in each case in the area of the flange (8.1).

2. A method for determining the condition, in particular the loading condition, of a filter element (1, 2, 3) in a filter module (10) having a plurality of filter elements (1, 2, 3) arranged in parallel to one another in a fluid channel (4) according to Claim 1, having the following steps:
a) measuring the flow rate of fluid through a respective filter element (1, 2, 3), wherein the differential pressure of the fluid in the filter element (1, 2, 3) is detected,
b) comparing the measurement results from a) to flow rate values stored in a memory for the respective filter element (1, 2, 3),
c) deriving the condition, in particular the loading condition and/or aging condition, of a respective filter element based on the comparison executed according to b).

3. The method for determining the condition according to Claim 2 having the following additional steps
b') checking whether a measurement result exceeds or falls below a predefined limiting value and/or whether a change over time of the measurement results deviates from a stored experiential value and then
d) outputting a signal.

4. The method for determining the condition according to Claim 3, **characterized in that**
the signal is a
- warning signal to a machine or facility operator,
- shutdown signal to a machine or facility operator,
- shutdown signal of a machine or facility,
- trigger signal for a cleaning process of the filter element (1, 2, 3),
- trigger signal for a predictive maintenance order, or
- trigger signal for an ordering process of a replacement filter element (1, 2, 3).

5. A facility having a filter module (10) according to Claim 1, wherein the facility is designed as an energy generating facility, as an exhaust gas flow purification facility, as a turbo machine, or as a production facility.

## Revendications

1. Module filtrant (10) destiné à filtrer un courant de fluide, comprenant une pluralité d'éléments filtrants (1, 2, 3) disposés en parallèle les uns avec les autres dans un canal à fluide (4),
un capteur (7) étant monté sur chaque élément filtrant (1, 2, 3) pour déterminer l'état, notamment l'état de charge, de l'élément filtrant (1, 2, 3) respectif, les capteurs (7) étant réalisés sous la forme de capteurs de débit et les capteurs (7) mesurant la pression différentielle,
les éléments filtrants (1, 2, 3) étant réalisés sous la forme de cartouches filtrantes (8) pourvues d'un milieu filtrant (8.2) plissé, **caractérisé en ce que** les capteurs (7) sont positionnés sur le côté gaz purifié (6) d'un élément filtrant (1, 2, 3) respectif, et
la cartouche filtrante (8) possède respectivement une bride ronde (8.1) pourvue d'un creux central et le capteur (7) est monté respectivement dans la zone de la bride (8.1).

2. Procédé de détermination de l'état, notamment de l'état de charge, d'un élément filtrant (1, 2, 3) dans un module filtrant (10) comprenant une pluralité d'éléments filtrants (1, 2, 3) disposés en parallèle les uns avec les autres dans un canal à fluide (4) selon la revendication 1, comprenant les étapes suivantes :
a) mesure du débit du fluide à travers un élément filtrant (1, 2, 3) respectif, la pression différentielle du fluide étant acquise dans l'élément filtrant (1, 2, 3),
b) comparaison du résultat de mesure de a) avec des valeurs de débit stockées dans une mémoire pour l'élément filtrant (1, 2, 3) respectif,
c) dérivée de l'état, notamment de l'état de charge et/ou de l'état de vieillissement d'un élément filtrant respectif en se basant sur la comparaison effectuée selon b) .

3. Procédé de détermination de l'état selon la revendication 2, comprenant les étapes supplémentaires suivantes
b') vérification si un résultat de mesure devient inférieur ou supérieur à une valeur limite prédéfinie et/ou si une variation dans le temps des résultats de mesure s'écarte d'une valeur empirique stockée et ensuite
d) délivrance en sortie d'un signal.

4. Procédé de détermination de l'état selon la revendication 3, **caractérisé en ce que** le signal est un
- signal d'alerte à un opérateur de machine ou d'installation,
- signal de mise à l'arrêt à un opérateur de machine ou d'installation,
- signal de mise à l'arrêt d'une machine ou d'installations,
- signal de déclenchement pour un processus de nettoyage de l'élément filtrant (1, 2, 3),
- signal de déclenchement pour un ordre de maintenance prédictive ou
- signal de déclenchement pour un processus de commande d'un élément filtrant (1, 2, 3) de rechange.

5. Installation comprenant un module filtrant (10) selon la revendication 1, l'installation étant réalisée sous la forme d'une installation de génération d'énergie, d'une installation de purification d'un courant de gaz d'échappement, d'une turbomachine ou d'une installation de production.
